# EUROPÄISCHE PATENTSCHRIFT

(11) **EP 0 791 992 B1**
(45) Veröffentlichungstag und Bekanntmachung des Hinweises auf die Patenterteilung: **04.07.2001**
(21) Anmeldenummer: 97102561.4
(22) Anmeldetag: 18.02.1997
(51) Int. Cl.: H02B 13/00, H02B 13/02

(54) **Mittel- oder Niederspannungsschaltanlage**
Medium- or low voltage switchgear
Installation de distribution électrique moyenne ou basse tension

(30) Priorität: 22.02.1996 DE 19606597
(43) Veröffentlichungstag der Anmeldung: 27.08.1997
(73) Patentinhaber: ABB PATENT GmbH, 68309 Mannheim (DE)
(72) Erfinder: Brechtken, Dirk, Dr., D-69469 Weinheim (DE)
(74) Vertreter: Rupprecht, Klaus, Dipl.-Ing.

(56) Entgegenhaltungen:
- DE-A- 3 729 454
- DE-A- 4 344 127
- GB-A- 2 285 178
- US-A- 3 718 840

## Beschreibung

Die Erfindung betrifft eine Mittel- oder Niederspannungsschaltanlage nach den Oberbegriffen der Ansprüche 1, 2 und 4.

Ein Kurzschluß in einem Schaltfeld oder in einer Schaltanlage wird üblicherweise durch Abschalten des zugehörigen Leistungsschalters unterbrochen. Zwischen dem Erkennen des Kurzschlusses und der mechanischen Umsetzung des Auslöseimpulses bis zum endgültigen Ausschalten vergehen einige 10 ms. Während dieser Zeit sind alle Teile, die den Kurzschlußstrom führen, einer mechanischen Belastung ausgesetzt, die oft das 1000-fache der Belastung im Normalbetrieb übersteigt. Alle stromführenden Teile müssen so dimensioniert werden, daß sie dieser möglichen Extrembelastung standhalten können.

Aus der DE 37 29 454 A1 ist eine Niederspannungsschaltanlage bekannt geworden, die gabelförmige Kontaktstücke aufweist, die einen Abschnitt verringerten Querschnitts besitzen, der bei Auftreten bzw. Überschreiten eines bestimmten Über- oder Kurzschlußstromes durchschmilzt und sicherungsartig eine Stromunterbrechung bewirkt.

Aufgabe der Erfindung ist es, eine Schaltanlage für Mittel- oder Niederspannung der eingangs genannten Art so zu verbessern, daß die Dimensionierung der einzelnen Komponenten eine Vereinfachung und eine Verbilligung der Schaltanlage mit sich bringt.

Diese Aufgabe wird erfindungsgemäß durch die Merkmale der Ansprüche 1, 2 oder 4 gelöst.

Als strombegrenzendes Bauelement ist ein PTC-Widerstand vorgesehen, also ein Widerstand mit einer positiven Temperaturcharakteristik, bei dem bei Erhöhung der Temperatur auch der Widerstand erhöht wird.

Die Verwendung eines solchen PTC-Widerstandselementes ist aus der DE 43 40 632 A1 mit weiteren Nachweisen bekannt geworden. Bei dieser bekannten Anordnung ist zur Vereinfachung und Verbilligung einer Leistungsschaltereinrichtung in Reihe mit einem elektrischen Lasttrennschalter ein solcher nicht linearer Widerstand mit positivem Temperaturkoeffizienten geschaltet, der den auftretenden Überstrom auf von dem Lasttrennschalter schaltbare Stromwerte begrenzt.

In einer Schaltanlage bestehen mehrere Möglichkeiten, wo PTC-Widerstand ein als strombegrenzendes Bauteil eingesetzt werden kann:

Wenn ein Schaltfeld sog. Verteilschienen aufweist, die an den Sammelschienen angeschlossen sind und den Strom der Sammelschienen an einzelne Einschubabschnitte im Schaltfeld verteilen, wie es in Niederspannungsschaltanlagen der Fall ist, dann können die strombegrenzenden Bauteile an den Verbindungsstellen zwischen den Sammelschienen und den Verteilschienen vorgesehen sein.

Es besteht natürlich auch die Möglichkeit, jedem einzelnen Einschub ein strombegrenzendes Bauteil zuzuordnen. Dabei wird das strombegrenzende Bauteil am Eingang jedes Einschubes angeordnet werden. Wenn beispielsweise der Einschub mit einem zwei federnd aufeinanderzugedrückte Finger aufweisenden Kontaktstück mit der Verteilungsschiene kontaktiert wird, dann kann das Kontaktstück selbst das strombegrenzende Bauteil sein, an welches ggf. ein Anschlußleiter im Inneren eines Einschubes angeschlossen ist.

Es besteht darüberhinaus auch die Möglichkeit, das Kontaktstück mit einem Fortsatz zu versehen, der mit einem Kontaktanschluß an einem Einschub dadurch kontaktiert ist, daß der Fortsatz zwischen den Kontaktfingern eines den Kontaktanschluß am bzw. zum Einschub bildenden weiteren Kontaktstückes festklemmbar ist. Im allgemeinen besitzt jeder Einschub eine Art Einschubkontaktelement, das eine der Anzahl der Phasen entsprechende Anzahl von Kontaktstücken besitzt; diese Kontaktstücke können dann mit jenen Kontaktstücken entsprechend kontaktiert werden, welche an der Verteilschiene angeschlossen sind und den Fortsatz besitzen. Wie schon dargestellt, können die dem Einschub direkt zugeordneten Kontaktstücke selbst die strombegrenzenden Bauteile sein, so daß zusätzliche Kontaktstücke nicht mehr erforderlich werden.

Eine weitere vorteilhafte Ausgestaltung bzw. Verbesserung der Erfindung gemäß dem Anpruch 2 ist dem Unteranspruch 3 zu entnehmen.

Die Wirkungsweise der erfindungsgemäßen Anordnung ist wie folgt: Wenn ein Kurzschlußstrom auftritt, dann erzeugt dieser Strom eine dem Quadrat des Stromes proportionale Verlustleistungen. Bei dem PTC-Element ist der Widerstand bei Raumtemperatur niedrig, steigt aber oberhalb einer definierten Temperatur schlagartig auf ein hohes Vielfaches seines ursprünglichen Wertes an, so daß die Impedanz des Kurzschlußkreises sprunghaft ansteigt. Dies führt zur Begrenzung und Verringerung des Kurzschlußstromes, so daß solche Bauteile als selektive Strombegrenzer einen wartungsfreien Kurzschlußschutz der Schaltanlage bzw. des einzelnen Schaltfeldes oder des einzelnen Einschubes darstellen. Da bei Begrenzung des Kurzschlußstromes und Abkühlung des Bauteiles, z. B. nach Abschaltung des Einspeiseleistungsschalters, die Impedanz auf den ursprünglichen Wert wieder absinkt, ist der Vorgang damit reversibel.

Tritt der Fehler auf der Sammelschiene auf, so reduziert das strombegrenzende Bauteil den Strom auf der Sammelschiene; tritt der Fehler auf in einer Verteilschiene, so sind die strombegrenzenden Bauteile in den Verbindungspunkten beider Schienensysteme für die Strombegrenzung zuständig und die benachbarten Felder bleiben von einer Versorgungsunterbrechung verschont. Wenn ein strombegrenzendes Bauteile den einzelnen Einschüben innerhalb eines Schaltfeldes zugeordnet ist, so kann die Unterbrechung auf den Einschub begrenzt bleiben, in dem der Fehler auftritt.

Es ist klar, daß ein strombegrenzendes Bauteil an jeder Phase vorzusehen ist. Wenn die Sammelschiene dreiphasig ist, dann sind der Sammelschiene drei strombegrenzende Bauteile zugeordnet; in gleicher Weise sind drei strombegrenzende Bauteile an den Verbindungsstellen der Sammelschiene und den Verteilschienen vorzusehen und in entsprechender Weise sind jedem Einschub ebenfalls drei strombegrenzende Bauteile zuzuordnen.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine schematische Ansicht einer Schaltanlage,
- Fig. 2: eine Verbindungsstelle zur Verbindung einer Sammelschiene mit einer Verteilschiene,
- Fig. 3: die Anordnung gemäß Fig. 2 im Schnitt,
- Fig. 4: ein strombegrenzendes Bauelement, welches in einen Sammelschienenpfad einsetzbar ist,
- Fig. 5: eine Seitenansicht eines Kontaktstückes mit eingesetztem strombegrenzenden Widerstand,
- Fig. 6: eine Ansicht gemäß Pfeilrichtung VI-VI der Fig. 5, und
- Fig. 7: eine Aufsicht entsprechend Pfeilrichtung VI-VI auf eine weitere Ausführungsform der Erfindung.

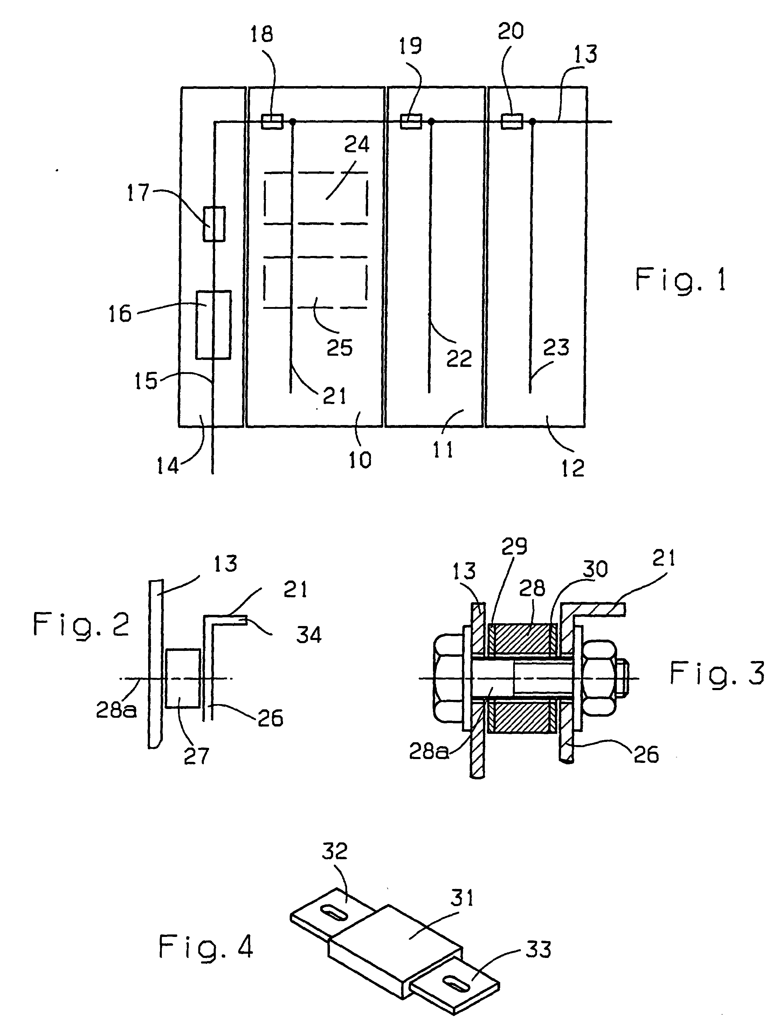

Die Schaltanlage gemäß Fig. 1 besitzt drei Schaltfelder 10, 11 und 12, durch die eine Sammelschienenanordnung 13 (kurz auch Sammelschiene genannt) hindurchgeleitet ist. Vor den Schaltfeldern 10, 11 und 12 befindet sich ein Einspeisefeld 14. Der Leitungszug 15 des Einspeisefeldes 14, der durch eine Linie dargestellt ist, aber drei Leiter aufweist, entsprechend der Anzahl der Phasen, besitzt einen Leistungsschalter 16, hinter dem ein strombegrenzendes Bauteil 17 angeordnet ist. Der Begriff "hinter dem Leistungsschalter 16" ist in Einspeiserichtung gesehen. Es besteht natürlich auch die Möglichkeit, das strombegrenzende Bauteil vor dem Leistungsschalter 16 anzuordnen mit der Folge, daß der Leistungsschalter schwächer ausgebildet sein kann als ohne ein solches strombegrenzendes Bauteil.

Die einzelnen Schaltfelder 10, 11 und 12 besitzen in den Sammelschienen 13 (auch hier ist lediglich eine Linie gezeichnet, obwohl eine der Anzahl der Phasen entsprechende Anzahl von Sammelschienen vorgesehen ist) in dem Bereich der Sammelschienen 13, die jeweils dem Einspeisefeld 14 am nächstgelegenen ist, je ein strombegrenzendes Bauteil 18, 19 und 20.

Es besteht dabei die Möglichkeit, daß die strombegrenzenden Bauteile 18 bis 20 nicht vorhanden sind. In dem Fall, würde bei einem Kurzschluß beispielsweise in dem Schaltfeld 11 das strombegrenzende Bauteil 17 ansprechen und alle Schaltfelder 10, 11 und 12 würden von der Strombegrenzung beeinflußt.

Es besteht nun die Möglichkeit, anstatt des strombegrenzenden Bauteiles 17 die strombegrenzenden Bauteile 18, 19 und 20 den einzelnen Schaltfeldern 10, 11 und 12 zuzuordnen. Wenn dann ein Kurzschluß im Schaltfeld 12 entsteht, dann sind die beiden davor liegenden Schaltfelder 10 und 11 unbeeinflußt, weil lediglich das Schaltfeld 12 durch den strombegrenzenden Widerstand 20 beeinflußt ist.

In den einzelnen Schaltfeldern befinden sich sog. Verteilschienen 21, 22 und 23, welche die Energie der Sammelschienen auf einzelne Einschübe 24 und 25 verteilen. Die mechanische Verbindung zwischen der Sammelschiene 13 und einer Verteilschiene 21 zeigt die Fig. 2. Die Verteilschiene 21 ist dabei L-förmig im Querschnitt ausgebildet, wobei der Schenkel 26, der parallel zu der Sammelschiene 13 verläuft, mittels eines Kupferzylinders 27 und einer Schraubverbindung 28a elektrisch leitend mit der Sammelschiene 13 verbunden ist.

Die Fig. 3 zeigt nun eine Anordnung mit einem strombegrenzenden Bauteil. Zwischen der Sammelschiene 13 und dem Schenkel 26 der Verteilschiene 21 befindet sich ein PTC-Widerstand 28, der eine Hohlzylinderform aufweist, wobei die Stirnflächen 29 und 30 metallisiert sind, damit ein guter elektrischer Übergang zwischen der Sammelschiene 13, dem Widerstand 28 und der Verteilschiene 21 gewährleistet ist. Zur Verbindung ist die Schrauben-Mutternverbindung 28a vorgesehen.

Die Fig. 4 zeigt in perspektivischer Darstellung ein strombegrenzendes Bauteil in Form einer Blackbox 31, an deren sich gegenüberliegenden Stirnseiten Anschlußfahnen 32 und 33 angeschlossen sind, mit denen das Bauteil 31 in eine Sammelschiene eingebaut werden kann. Im Niederspannungsbereich ist jede Sammelschiene durch Flachbandmaterial gebildet und dafür ist das Bauteil gemäß Fig. 4 anwendbar. Bei Mittelspannungsanlagen, bei denen die Sammelschiene eine andere Querschnittsform aufweisen kann, wären die Anschlußfahnen 32, 33 entsprechend anzupassen.

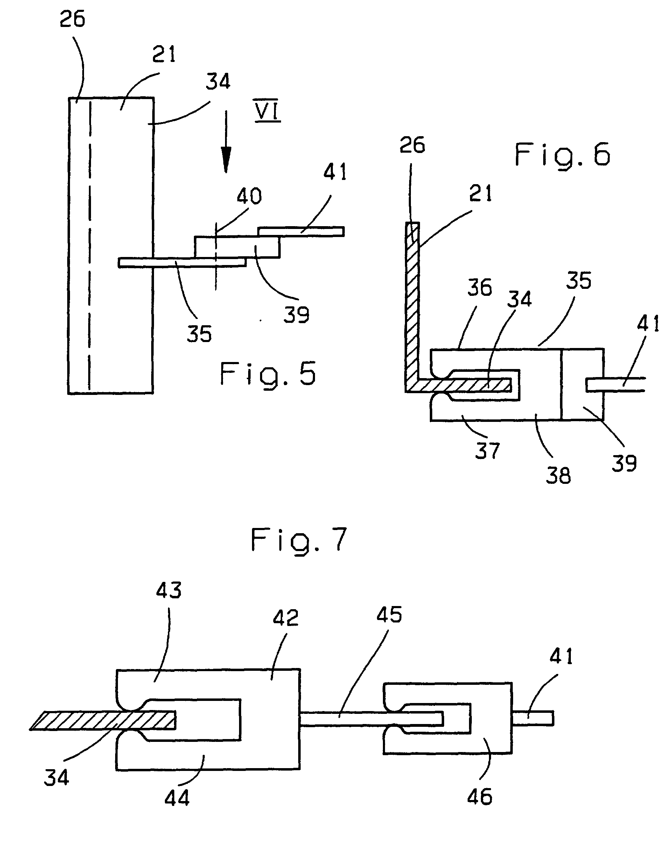

Bei der Ausführung nach der Fig. 5 ist eine Verteilschiene 21 dargestellt, deren Schenkel 34 von einem Anschlußkontakt 35 kontaktiert ist. Der Anschlußkontakt besitzt zwei Kontaktfinger 36, 37, die mittels einer nicht näher dargestellten Omegafeder federnd gegeneinander gedrückt sind. Die Kontaktfinger 36 und 37 sind an einem Flachkontaktstück 38 angeformt. Das Flachkontaktstück 38 zusammen mit den Kontaktfingern 36 und 37 ist so geformt wie ein übliches Kontaktstück, mit dem ein Flachband kontaktiert werden kann; die Form ist an sich bekannt. An dem freien Ende des Flachkontaktstückes 38 ist ein PTC-Bauteil 39 mittels einer Schraubverbindung 40 befestigt, an dem wiederum ein Anschlußkabel 41 angebracht ist.

Bei der Ausführung nach Fig. 7 ist der Schenkel 34 der Verteilschiene von einem Kontaktstück 42 umfaßt, welches ähnlich wie der Anschlußkontakt 35 zwei Kontaktfinger 43 und 44 aufweist, die federnd gegeneinander gedrückt sind. An dem Kontaktstück 42 schließt ein Fortsatz 45 an, der von einem dem Kontaktstück 38 entsprechenden Kontaktstück 46 umfaßt ist. An dem Kontaktstück 46 schließt ein Anschlußkabel 41 an. Das Kontaktstück 42 mit dem Fortsatz 45 ist das strombegrenzende Bauteil. Bei der Ausführung nach Fig. 2 sind zwei Kontaktstücke 42 und 46 hintereinander geschaltet; das Kontaktstück 42 als das strombegrenzende Bauteil kontaktiert mit dem Schenkel 34 der Verteilschiene 21 und das Kontaktstück 46 kontaktiert mit dem Fortsatz 45 des Kontaktstückes 42, und an dem Kontaktstück 46 ist der Anschlußleiter 41 angeschlossen.

Selbstverständlich ist bei dreiphasigen Anlagen je Phase ein Kontaktstück 42 bzw. 46 vorhanden.

Es bestehen noch weitere Möglichkeiten, an welcher Stelle und auf welche Weise ein solches strombegrenzendes Bauelement innerhalb eines Schaltfeldes eingesetzt werden kann. Die obige Beschreibung soll keinesfalls eine Beschränkung der Erfindung auf die Ausführungsbeispiele beinhalten.

## Patentansprüche

1. Mittel- oder Niederspannungsschaltanlage, mit wenigstens einem Schaltfeld (10 bis 14), in dem sich folgende Komponenten befinden:
- Sammelschienen (13),
- Steuer-, Schalt- und Regelgeräte, insbesondere Leistungsschalter (16),
- ggf. mit den Sammelschienen (13) elektrisch leitend verbundene Verteilschienen (21 bis 23), mit denen Strom von den Sammelschienen (13) auf die Schalt-, Steuer- und Regelgeräte (16) verteilt wird,
dadurch gekennzeichnet, daß an den Verbindungsstellen zwischen den Sammelschienen (13) und den Verteilschienen (21, 22, 23) ein diese miteinander verbindender Distanzring (28) vorgesehen ist, der ein strombegrenzendes Bauteil ist, und daß das strombegrenzende Bauteil ein PTC-Widerstand ist.

2. Mittel- oder Niederspannungsschaltanlage, mit wenigstens einem Schaltfeld (10 bis 14) in dem sich folgende Komponenten befinden:
- Sammelschienen (13),
- Steuer-, Schalt- und Regelgeräte, insbesondere Leitungsschalter (16),
- ggf. mit den Sammelschienen (13) elektrisch leitend verbundene Verteilschienen (21 bis 23), mit denen Strom von den Sammelschienen (13) auf die Schalt-, Steuer- und Regelgeräte (16) verteilt wird,
- und mit einem Einschub (24, 25), der pro Phase über ein zwei federnd aufeinanderzugedrückte Federn aufweisendes Kontaktstück (35, 39, 42, 45) mit der zugehörigen Verteilschiene (21, 34) verbunden ist,
dadurch gekennzeichnet, daß das Kontaktstück (42, 45) ein strombegrenzendes Bauteil ist und daß als strombegrenzendes Bauteil (45) ein PTC-Widerstand vorgesehen ist.

3. Schaltanlage nach Anspruch 2, dadurch gekennzeichnet, daß das Kontaktstück (42) einen Fortsatz (45) aufweist, der mit einem Kontaktanschluß an einem Einschub dadurch kontaktiert ist, daß der Fortsatz (45) zwischen einem mit Kontaktfingern versehenen weiteren Kontaktstück (46) des Einschubes festklemmbar ist.

4. Mittel-oder Niederspannungsschaltanlage, mit wenigstens einem Schaltfeld, in dem sich folgende Komponenten befinden:
- Sammelschienen (13)
- Steuer-, Schalt- und Regelgeräte, insbesondere Leistungsschalter (16),
- ggf. mit den Sammelschienen (13) elektrisch leitend verbundene Verteilschienen (21, bis 23), mit denen Strom von den Sammelschienen (13) auf die Schalt-, Steuer- und Regelgeräte (16) verteilt wird,
- und mit einem Einschub (24, 25) der pro Phase über ein zwei federnd aufeinanderzugedrückte Federn aufweisendes Kontaktstück (35) mit der zugehörigen Verteilschiene (21 bis 23) verbunden ist,
dadurch gekennzeichnet, daß an dem Kontaktstück (35) ein strombegrenzendes Bauteil (39) befestigt ist, an dem ein Anschlußkabel (41) zu dem Einschub (24, 25) angeschlossen ist, wobei als strombegrenzendes Bauteil ein PTC-Widerstand vorgesehen ist.

## Claims

1. A medium or low voltage switchgear, with at least one switchgear panel (10 to 14) which comprises the following components:
- busbars (13),
- controllers, switchgears, automatic controlling equipment, in particular circuit-breakers (16),
- optionally with multi-terminal busbars (21 to 23) which are connected with the busbars (13) in an electrically conducting manner and with which current is distributed from the busbars (13) to the controllers, switchgears and automatic controlling equipment (16),
characterized in that at the connection places between the busbars (13) and the multi-terminal busbars (21, 22, 23) a spacer ring (28) is provided which mutually connects the same and is a current-limiting component, and that the current-limiting component is a PTC thermistor.

2. A medium or low voltage switchgear, with at least one switchgear panel (10 to 14) which comprises the following components:
- busbars (13),
- controllers, switchgears, automatic controlling equipment, in particular circuit-breakers (16),
- optionally with multi-terminal busbars (21 to 23) which are connected with the busbars (13) in an electrically conducting manner and with which current is distributed from the busbars (13) to the controllers, switchgears and automatic controlling equipment (16),
- and with a plug-in unit (24, 25) which is connected with the associated multi-terminal busbar (21, 34) for each phase via two contact points (35, 39, 42, 45) comprising two springs resiliently pressed against one another,
characterized in that the contact point (42, 45) is a current-limiting component and that a PTC thermistor is provided as a current-limiting component (45).

3. A switchgear as claimed in claim 2, characterized in that the contact point (42) is provided with an extension (45) which is in contact with a contact connection on a plug-in unit in such a way that the extension (45) can be clamped tightly between a further contact point (46) which is provided with contact fingers.

4. A medium or low voltage switchgear, with at least one switchgear panel which comprises the following components:
- busbars (13),
- controllers, switchgears, automatic controlling equipment, in particular circuit-breakers (16),
- optionally with multi-terminal busbars (21 to 23) which are connected with the busbars (13) in an electrically conducting manner and with which current is distributed from the busbars (13) to the controllers, switchgears and automatic controlling equipment (16),
- and with a plug-in unit (24, 25) which is connected with the associated multi-terminal busbar (21 to 23 ) for each phase via a contact point (35) comprising two springs resiliently pressed against one another,
characterized in that a current-limiting component (39) is attached to the contact point (35) on which a connection lead (41) to the plug-in unit (24, 25) is connected, with a PTC thermistor being provided as a current-limiting component.

## Revendications

1. Installation de distribution électrique à moyenne et basse tension, comportant au moins un tableau de distribution (10 à 14) avec les composants suivants:
- des barres collectrices (13),
- des appareils de commande, de commutation et de réglage, en particulier des disjoncteurs de puissance (16)
- éventuellement des barres de distribution (21 à 23) qui sont reliées de manière électro-conductrice aux barres collectrices (13) et par lesquelles le courant est distribué des barres collectrices (13) aux appareils de commande, de commutation et de réglage (16),
caractérisé en ce qu'il est prévu aux points de liaison entre les barres collectrices (13) et les barres de distribution (21, 22, 23), une bague d'espacement (28) qui les relie entre elles et qui est un composant limiteur de courant et en ce que le composant limiteur de courant est une résistance CTP.

2. Installation de distribution électrique à moyenne et basse tension, comportant au moins un tableau de distribution (10 à 14) avec les composants suivants:
- des barres collectrices (13),
- des appareils de commande, de commutation et de réglage, en particulier des disjoncteurs de puissance (16)
- éventuellement des barres de distribution (21 à 23) qui sont reliées de manière électro-conductrice aux barres collectrices (13) et par lesquelles le courant est distribué des barres collectrices (13) aux appareils de commande, de commutation et de réglage (16),
- et un élément embrochable (24, 25) qui, pour chaque phase, est relié à la barre de distribution (21,34) concernée par une pièce de contact (35, 39, 42, 45) comportant deux ressorts pressés élastiquement en direction l'un de l'autre,
caractérisé en ce que la pièce de contact (42, 45) est un composant limiteur de courant et en ce qu'il est prévu, en tant que composant de limiteur de courant (45), une résistance CTP.

3. Installation de distribution électrique selon la revendication 2, caractérisée en ce que la pièce de contact (42) présente un prolongement (45) qui est connecté à une borne de contact d'un élément embrochable par le fait que le prolongement (45) est serré entre une pièce de contact (46) supplémentaire de l'élément embrochable pourvue de doigts de contact.

4. Installation de distribution électrique à moyenne et basse tension, comportant au moins un tableau de distribution (10 à 14) avec les composants suivants:
- des barres collectrices (13),
- des appareils de commande, de commutation et de réglage, en particulier des disjoncteurs de puissance (16)
- éventuellement des barres de distribution (21 à 23) qui sont reliées de manière électro-conductrice aux barres collectrices (13) et par lesquelles le courant est distribué des barres collectrices (13) aux appareils de commande, de commutation et de réglage (16),
- et un élément embrochable (24, 25) qui pour chaque phase est relié à la barre de distribution (21 à 23) concernée par une pièce de contact (35) comportant deux ressorts pressés élastiquement en direction l'un de l'autre,
caractérisé en ce qu'un composant limiteur de courant (39) auquel est relié un câble de liaison (41) menant à l'élément embrochable( 24, 25) est fixé à la pièce de contact (35), une résistance CTP étant prévue en tant que composant limiteur de courant.
